# EUROPEAN PATENT APPLICATION

(11) **EP 4 597 356 A1**
(43) Date of publication of application: **06.08.2025**
(21) Application number: 24219230.0
(22) Date of filing: 11.12.2024
(51) Int. Cl.: G06F 40/166, G06F 40/30, G06F 40/35, G06N 3/00

(54) **ARTIFICIALLY INTELLIGENT ASSISTANT FOR WORK PROTOCOLS**

(30) Priority: 31.01.2024 US 202418429178
(71) Applicant: The Boeing Company, Arlington, VA 22202 (US)
(72) Inventor: Neblett, Samuel Helm, Arlington, 22202 (US)
(74) Representative: Witte, Weller & Partner Patentanwälte mbB

(57) **Abstract**

A computer-implemented method (400) comprises storing (210) technical documents (104) in a storage device (102). The technical documents (104) include at least work protocols (112) and technical data files tagged with metadata (124). One or more large language models (134) are trained (230) on at least the work protocols (112), and text (122) and metadata (124) extracted from the technical documents (104). An artificially intelligent assistant (142) is commissioned (240) for the large language models (134), the artificially intelligent assistant (142) configured to at least retrieve text (122) and metadata (124) in response to receiving a prompt (502). A digital work environment (140) including an interface for the artificially intelligent assistant (142) is provided (250). At the artificially intelligent assistant (142), a prompt (502) related to a first work protocol (308) is received (410). Text (122) and metadata (124) related to the first work protocol (308) are retrieved (420) via the large language model (134) based on the received prompt (502). A contextual response (504) is provided (430) via the digital work environment (140) based on the retrieved text (122) and metadata (124).

## Description

### FIELD

This disclosure generally relates to the use of artificially intelligent assistants for the purposes of authoring, delivering, and executing engineering and manufacturing work protocols.

### BACKGROUND

Large engineering and manufacturing firms utilize significant documentation in the form of design specifications, procedures, policies, and computer aided drafting (CAD) metadata to enable day-to-day operations across product lifecycles, from planning and design phases to production and post-delivery support.

To create and/or utilize Model Based Definitions (MBD) and Model Based Instructions (MBI), such as work protocols, engineers and technicians are required to manually access and read technical documentation, specification sheets, policies, and procedures stored in multiple locations. Generally, this involves a manual process to access and review this information, requiring engineers to aggregate disparate documentation and metadata from multiple programs and sources. Further, a vast amount of tacit and program knowledge is required to access and utilize each system and its related documentation. Very few employees are likely to hold all the institutional knowledge needed to generate blanket coverage.

### SUMMARY

A computer-implemented method comprises storing technical documents in a storage device. The technical documents include at least work protocols and technical data files tagged with metadata. One or more large language models are trained on at least the work protocols, and text and metadata are extracted from the technical documents. An artificially intelligent assistant is commissioned for the large language models, the artificially intelligent assistant configured to at least retrieve text and metadata in response to receiving a prompt. A digital work environment including an interface for the artificially intelligent assistant is provided. At the artificially intelligent assistant, a prompt related to a first work protocol is received. Text and metadata related to the first work protocol are retrieved via the large language model based on the received prompt. A contextual response is provided via the digital work environment based on the retrieved text and metadata.

### BRIEF DESCRIPTION OF THE DRAWINGS

FIG. 1 shows an example computing system comprising a storage device and a large language model.
FIG. 2 shows a flow-diagram for an example computer-implemented method for commissioning an artificially intelligent assistant for a large language model.
FIG. 3 shows an example digital work environment featuring an artificially intelligent assistant.
FIG. 4 shows a flow-diagram for an example computer-implemented method for operating an artificially intelligent assistant.
FIG. 5 shows an example scenario for an artificially intelligent assistant providing a response to a text prompt.
FIG. 6 shows an example scenario for an artificially intelligent assistant providing a response to in-context progress through a work protocol.
FIG. 7 shows an example scenario for an artificially intelligent assistant providing a contextual prompt and response.
FIG. 8 shows an example scenario for an artificially intelligent assistant dynamically resequencing a work protocol.
FIG. 9 shows a user equipped with an augmented-reality device in a work environment.
FIG. 10 shows an example augmented reality digital work environment featuring an artificially intelligent assistant.
FIG. 11 shows a flow-diagram for an example computer-implemented method for generating low-granularity work protocols with an artificially intelligent assistant.
FIG. 12 shows an example scenario for generating a low-granularity work protocol.
FIG. 13 shows an example scenario for adapting a low-granularity work protocol.
FIG. 14 shows a flow-diagram for an example computer-implemented method for contextual retraining of a large language model.
FIG. 15 shows an example scenario for an artificially intelligent assistant providing a response to a text prompt.
FIG. 16 shows an example scenario for an artificially intelligent assistant providing a response to a text prompt following retraining of a large language model.
FIG. 17 schematically shows an example computing system.

### DETAILED DESCRIPTION

Herein, systems and methods are provided for aggregating disparate documentation and metadata from multiple programs and sources into centralized Large Language Models (LLM). An artificially intelligent (AI) assistant is commissioned that provides an interface between the user and the LLMs. Such an AI assistant may quickly and efficiently inform engineers engaged in design and authoring decisions of relevant and contextual information, while also facilitating manufacturing by intelligently informing technicians of work instruction processes and procedures in context. The AI assistant and LLMs intelligently aggregate, provide access, and deliver data to users of work protocols. This provides benefits over traditional methods that require users of work instruction to manually find called-out information.

The disclosed methods utilize an LLM built from existing and evolving company and engineering documentation, which is then made queryable from within digital work protocols. Input can be taken via user input in the form of text input and in-context progress made within a digital work instruction application, which is then transmitted to an AI assistant that interfaces with an LLM. Responses from the AI assistant are provided in a digital work instruction application and are displayed to users via text within the application, virtual object translation, and highlighting object capabilities where applicable.

By providing an intelligent AI assistant within digital work instruction, this tacit knowledge is made explicit and easily accessible to an entire organization. Other similar "chatbots" are typically only capable of being trained on public data, not private and proprietary data, and not applied within context of work instruction or complex systems visualizations.

Technical benefits of implementing the disclosed systems and methods include substantial cost and time reduction by eliminating training time, design time, and manufacturing time. Further, the AI assistant and LLMs may be used to generate low-granularity work protocols that can be used as a cross-enterprise standard. Additionally, the LLMs may be constantly retrained as documentation is updated, by either users or the AI assistant itself. The disclosed systems and methods can reduce errors in procedure planning, design, and execution during production, while also enabling technicians to more easily understand their work in-context, reference required documentation, and reduce rework due to error.

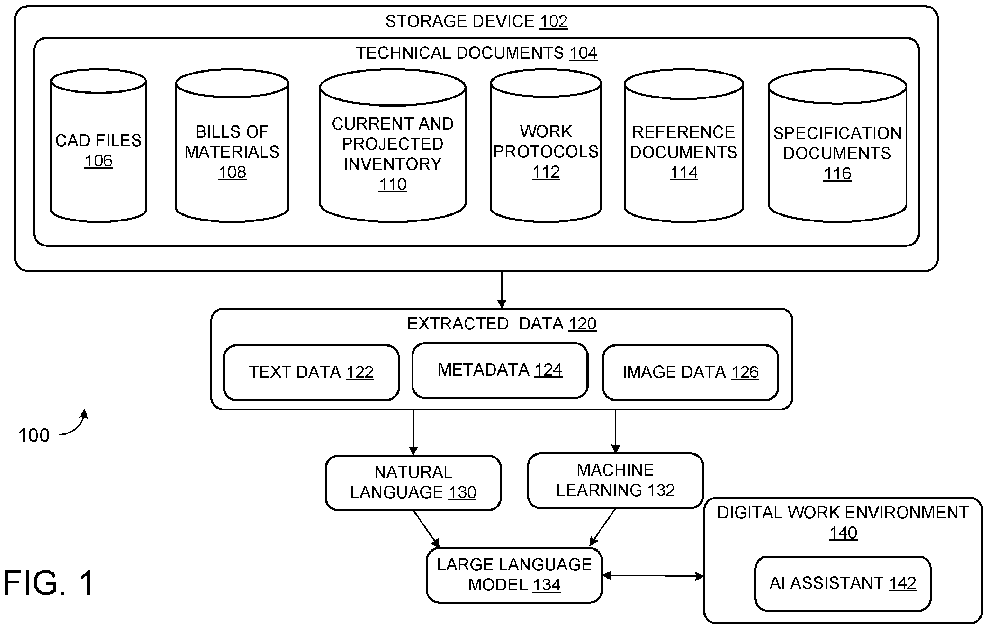

FIG. 1 shows an example computing system 100. Computing system 100 comprises a storage device 102 configured store at least technical documents 104. Storage device 102 may be a network accessible storage drive, such as a locally accessible or remote accessible storage drive. Storage device 102 may also comprise one or more local storage devices. For example, a subset of technical documents 104 may be downloaded to a local storage drive for local retrieval and/or off-line use. When configured as a network accessible storage drive, storage device 102 may be located behind a firewall and/or other security level, and may not be accessible outside of a local network and/or without credentials. Technical documents 104 includes CAD files 106, bills of materials 108, current and projected inventory 110, work protocols 112, reference documents 114, and specification documents 116. Work protocols 112 may include both engineering and manufacturing work protocols, as well as training protocols, repair protocols, inspection protocols, etc. Work protocols may include work instructions and other materials that are used for pre-production, production, mid-production, and/or post-production for one or more programs. Specification documents 116 may include local specifications for systems, subsystems and components, customer specifications, etc. Technical documents 104 may further include analysis models, geometric models, behavioral models, analytic models, electrical models, compliance models, requirements models, functional models, design models, and/or integrated simulation models, code, verification and validation reports, 2-D schematics, 3-D schematics, unstructured documents, and/or other suitable information that pertains to the design and/or manufacture of a tangible article, such as an aircraft, spacecraft, and/or other aeronautical component, such that a skilled artisan would be capable of building or assembling the tangible article given the technical data file(s). As used herein, technical documents generally refer to documents that may contain information related carrying out a set of instructions, e.g., documents that contain information that may be usable by a technician in executing an engineering and/or manufacturing work protocol. In some examples, technical documents associated with different projects may be stored in different sub-repositories.

Extracted data 120 may be extracted from technical documents 104. Extracted data includes text data, 122, metadata 124, and image data 126. Extracted data 120 may be fed to one or more machines, such as natural language processors 130 and/or machine learning modules 132. Natural language processors 130 and machine learning modules 132 may be configured to train one or more large language models 134 on extracted data 120. A digital work environment 140 may be provided for users wishing to interface with large language model 134. An artificially intelligent assistant 142 may be commissioned to allow users to submit prompts and queries to large language model 134.

In this way, LLM 134 may be built from existing and evolving company and engineering documentation, which is then made searchable and retrievable from within digital work environment 140 via artificially intelligent assistant 142. In particular, the system enables methods of aggregating disparate documentation and metadata from multiple programs and sources into centralized LLMs and implements an interface to access an embedded AI assistant, which quickly and efficiently informs engineers engaged in design and authoring decisions of relevant and contextual information, while also facilitating manufacturing through intelligently informing technicians of work instruction processes and procedures in context. LLM 134 may be stored on a network-accessible storage device, such as a cloud computer, and/or on a local storage device. In some examples, lightweight versions of LLM 134, such as versions that deal with one or more specific programs may be downloaded to local storage.

Machines may be implemented using any suitable combination of state-of-the-art and/or future machine learning (ML), artificial intelligence (AI), and/or natural language processing (NLP) techniques. Non-limiting examples of techniques that may be incorporated in an implementation of one or more machines include support vector machines, multi-layer neural networks, convolutional neural networks (e.g., including spatial convolutional networks for processing images and/or videos, temporal convolutional neural networks for processing audio signals and/or natural language sentences, and/or any other suitable convolutional neural networks configured to convolve and pool features across one or more temporal and/or spatial dimensions), recurrent neural networks (e.g., long short-term memory networks), associative memories (e.g., lookup tables, hash tables, Bloom Filters, Neural Turing Machine and/or Neural Random Access Memory), word embedding models (e.g., GloVe or Word2Vec), unsupervised spatial and/or clustering methods (e.g., nearest neighbor algorithms, topological data analysis, and/or k-means clustering), graphical models (e.g., (hidden) Markov models, Markov random fields, (hidden) conditional random fields, and/or AI knowledge bases), and/or natural language processing techniques (e.g., tokenization, stemming, constituency and/or dependency parsing, and/or intent recognition, segmental models, and/or super-segmental models (e.g., hidden dynamic models)).

In some examples, the methods and processes described herein may be implemented using one or more differentiable functions, wherein a gradient of the differentiable functions may be calculated and/or estimated with regard to inputs and/or outputs of the differentiable functions (e.g., with regard to training data, and/or with regard to an objective function). Such methods and processes may be at least partially determined by a set of trainable parameters. Accordingly, the trainable parameters for a particular method or process may be adjusted through any suitable training procedure, in order to continually improve functioning of the method or process.

Non-limiting examples of training procedures for adjusting trainable parameters include supervised training (e.g., using gradient descent or any other suitable optimization method), zero-shot, few-shot, unsupervised learning methods (e.g., classification based on classes derived from unsupervised clustering methods), reinforcement learning (e.g., deep Q learning based on feedback) and/or generative adversarial neural network training methods, belief propagation, RANSAC (random sample consensus), contextual bandit methods, maximum likelihood methods, and/or expectation maximization. In some examples, a plurality of methods, processes, and/or components of systems described herein may be trained simultaneously with regard to an objective function measuring performance of collective functioning of the plurality of components (e.g., with regard to reinforcement feedback and/or with regard to labelled training data). Simultaneously training the plurality of methods, processes, and/or components may improve such collective functioning. In some examples, one or more methods, processes, and/or components may be trained independently of other components (e.g., offline training on historical data).

Language models may utilize vocabulary features to guide sampling/searching for words for recognition of speech. For example, a language model may be at least partially defined by a statistical distribution of words or other vocabulary features. For example, a language model may be defined by a statistical distribution of n-grams, defining transition probabilities between candidate words according to vocabulary statistics. The language model may be further based on any other appropriate statistical features, and/or results of processing the statistical features with one or more machine learning and/or statistical algorithms (e.g., confidence values resulting from such processing). In some examples, a statistical model may constrain what words may be recognized for an audio signal, e.g., based on an assumption that words in the audio signal come from a particular vocabulary.

Alternately or additionally, the language model may be based on one or more neural networks previously trained to represent audio inputs and words in a shared latent space, e.g., a vector space learned by one or more audio and/or word models (e.g., wav2letter and/or word2vec). Accordingly, finding a candidate word may include searching the shared latent space based on a vector encoded by the audio model for an audio input, in order to find a candidate word vector for decoding with the word model. The shared latent space may be utilized to assess, for one or more candidate words, a confidence that the candidate word is featured in the speech audio.

The language model may be used in conjunction with an acoustical model configured to assess, for a candidate word and an audio signal, a confidence that the candidate word is included in speech audio in the audio signal based on acoustical features of the word (e.g., mel-frequency cepstral coefficients, formants, etc.). Optionally, in some examples, the language model may incorporate the acoustical model (e.g., assessment and/or training of the language model may be based on the acoustical model). The acoustical model defines a mapping between acoustic signals and basic sound units such as phonemes, e.g., based on labelled speech audio. The acoustical model may be based on any suitable combination of state-of-the-art or future ML and/or AI models, for example: deep neural networks (e.g., long short-term memory, temporal convolutional neural network, restricted Boltzmann machine, deep belief network), hidden Markov models (HMM), conditional random fields (CRF) and/or Markov random fields, Gaussian mixture models, and/or other graphical models (e.g., deep Bayesian network). Audio signals to be processed with the acoustic model may be preprocessed in any suitable manner, e.g., encoding at any suitable sampling rate, Fourier transform, band-pass filters, etc. The acoustical model may be trained to recognize the mapping between acoustic signals and sound units based on training with labelled audio data. For example, the acoustical model may be trained based on labelled audio data comprising speech audio and corrected text, in order to learn the mapping between the speech audio signals and sound units denoted by the corrected text. Accordingly, the acoustical model may be continually improved to improve its utility for correctly recognizing speech audio.

In some examples, in addition to statistical models, neural networks, and/or acoustical models, the language model may incorporate any suitable graphical model, e.g., an HMM or a CRF. The graphical model may utilize statistical features (e.g., transition probabilities) and/or confidence values to determine a probability of recognizing a word, given the speech audio and/or other words recognized so far. Accordingly, the graphical model may utilize the statistical features, previously trained machine learning models, and/or acoustical models to define transition probabilities between states represented in the graphical model.

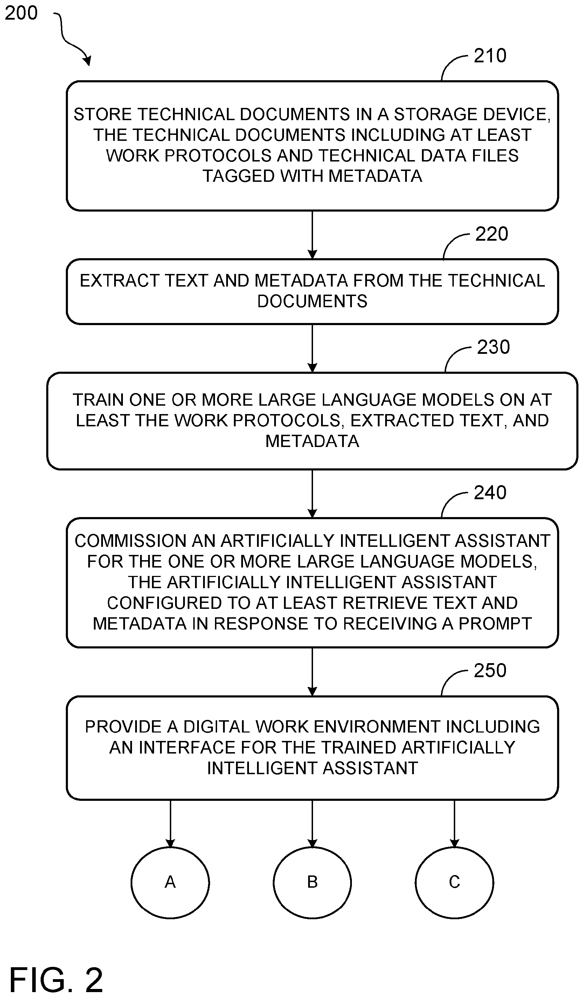

FIG. 2 shows a flow-diagram for an example computer-implemented method 200 for commissioning an artificially intelligent assistant for a large language model. FIG. 2 may be implemented by one or more computing systems, such as computing system 100.

At 210, method 200 comprises storing technical documents in a storage device, the technical documents including at least work protocols and technical data files tagged with metadata. The storage device may comprise one or more local storage devices and/or one or more network accessible storage devices. In some examples, images are extracted from the technical documents. The extracted images can also be used to train the large language models. In some examples, the stored technical documents include CAD engineering and/or drafting files as well as associated metadata.

As shown in FIG. 1, the technical documents may further comprise technician documentation, specification sheets, policies, procedures design specifications, and CAD metadata, inventory, model based definitions, model based instructions, etc. Technical documents may be stored in multiple locations and/or on different network accessible storage devices. Technical documents may further include pan-organization policies, such as clearance and security policies. The technical documents may aggregate documentation and metadata from multiple programs & sources. In some example, the technical documents include openended input from users and unstructured documents, such as notes from exit interviews.

At 220, method 200 comprises extracting text and metadata from the technical documents. In some examples, the technical documents may comprise contextual links to other technical documents, via interlinking or cross-linking. Such linkings may be preserved during extraction. Technical documents may be evolving and/or edited over time. The LLM may be retrained periodically or continuously as documents are updated.

At 230, method 200 comprises training one or more large language models on at least the work protocols, extracted text, and metadata as described with regard to LLM 134 and FIG. 1. Training may further involve supporting documentation and/or required specifications, such as those referenced but not included in the work protocols themselves. In some examples, the one or more large language models are trained to crosslink extracted text and metadata for each work protocol. In some examples, the technical documents are stored for a plurality of programs on a per-program basis. In such examples, the one or more large language models may be trained on a per-program basis. A program may comprise a particular manufacturing end-point (e.g., an aircraft) or a subset of that endpoint (e.g., jet engine). In some examples, an LLM may be trained for each program or a subset of programs using program-specific documents. Procedure documents and policy documents may affect multiple programs. For example, clearance documents may specify a level of clearance needed for an employee to work on certain projects. Other documents may be specific certain projects (e.g., parts lists) or sub-projects.

At 240, method 200 comprises commissioning an artificially intelligent assistant for the one or more large language models, the artificially intelligent assistant configured to at least retrieve text and metadata in response to receiving a prompt. Commissioning the AI assistant may include training the AI assistant to respond to prompts using information stored in the LLM. The AI assistant may be capable of assisting technical personnel and/or customers in accessing difficult-to-find and difficult-to-understand data via centralized locations, effectively converting tacit knowledge into explicit, accessible knowledge.

At 250, method 200 comprises providing a digital work environment including an interface for the artificially intelligent assistant. The trained AI assistant may be queryable from within the digital work environment. This may allow for users to access aspects of assembly sequences, assembly procedures, policies, specifications, and metadata from the storage device.

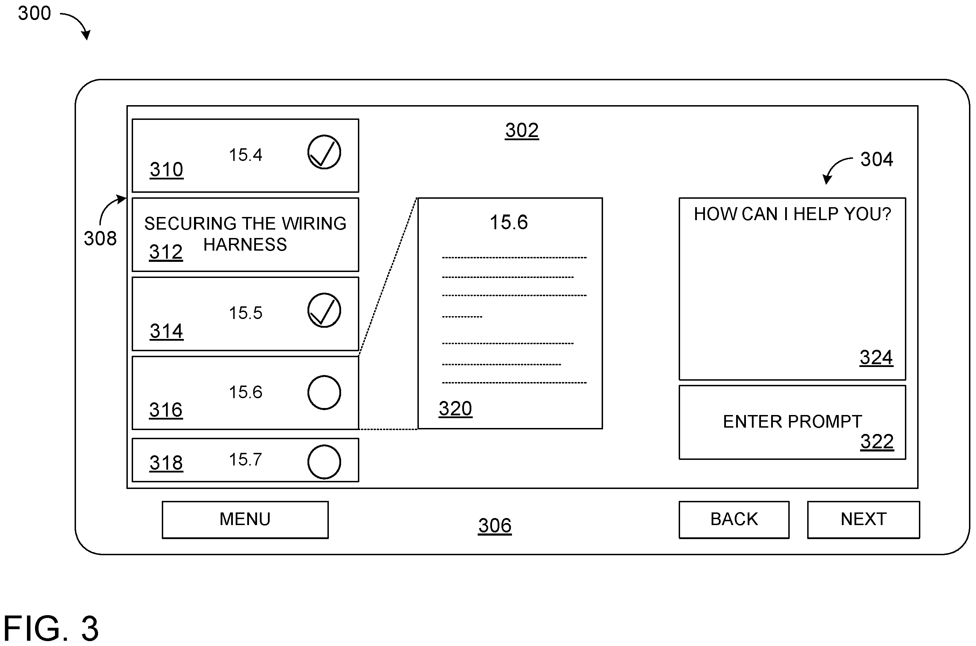

FIG. 3 shows a computing device 300 operating an example digital work environment 302 featuring an artificially intelligent assistant 304. Digital work environment 302 may be an example of digital work environment 140, and AI assistant 304 may be an example of AI assistant 142. Digital work environment 302 is merely provided as an example interface; any number of interfaces are possible. In this example, digital work environment 302 comprises a navigation pane 306. An example work protocol 308 is presented as a series of steps 310, 312, 314, 316, and 318. Steps 310 and 312 are denoted as completed by checkmarks. The user is thus engaged in step 15.6, a sub step of a protocol for securing a wiring harness. Additional information for step 15.6 is presented to the user at 320. AI assistant 304 includes at least a prompt box 322 and a response box 324. The user may ask questions via prompt box 322, such as, but not limited to, questions related to step 15.6. For example, a user at step 312 may ask how long securing the wiring harness is likely to take.

The digital work environment may enable contextual deployment of a somewhat generalized work instruction at execution time. For example, the digital work environment, in conjunction with the AI assistant may inform manufacturers of work instruction processes and procedures in context. The AI assistant may be provisioned to retrieve relevant contextual information related to a work protocol, and to provide that contextual information to a user through the digital work environment.

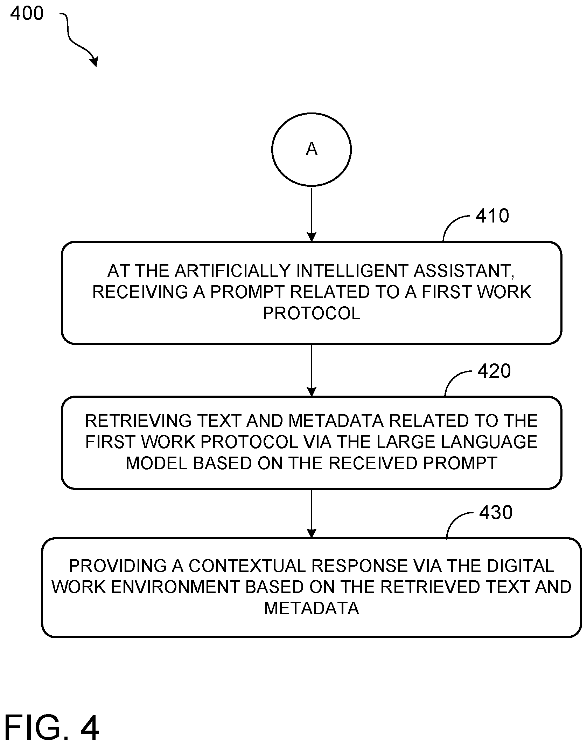

FIG. 4 shows a flow-diagram for an example computer-implemented method 400 for operating an artificially intelligent assistant. Method 400 may be implemented by one or more computing systems, such as computing systems 100 and 300. Method 400 may be performed in conjunction with method 200, as indicated by the circled A.

At 410, method 400 comprises, at the artificially intelligent assistant, receiving a prompt related to a first work protocol. Alternative embodiments of this AI assistant can be used in web browsers or outside of specific digital work environs as a means of querying and accessing aggregate data. The prompt may be derived from a text input entered by a user, such as via a keyboard or via speech-to-text. Prompts may be provided by users performing installation, repair, maintenance, training, inspection, design (e.g., visualizing in context). The prompt may be in relation to a current work protocol, such as recalling procedure information, specification, and/or policies references inside the work protocol. In other examples, the prompt may be derived from the AI assistant itself. In some examples described further herein, the prompt may be a visual prompt. As used herein, a "first work protocol" merely refers to a specific work protocol out of a plurality of potential work protocols. "First" does not imply timing or order unless explicitly described. It is contemplated that a single user could engage with multiple work protocols over the course of method 400 and/or iterations thereof.

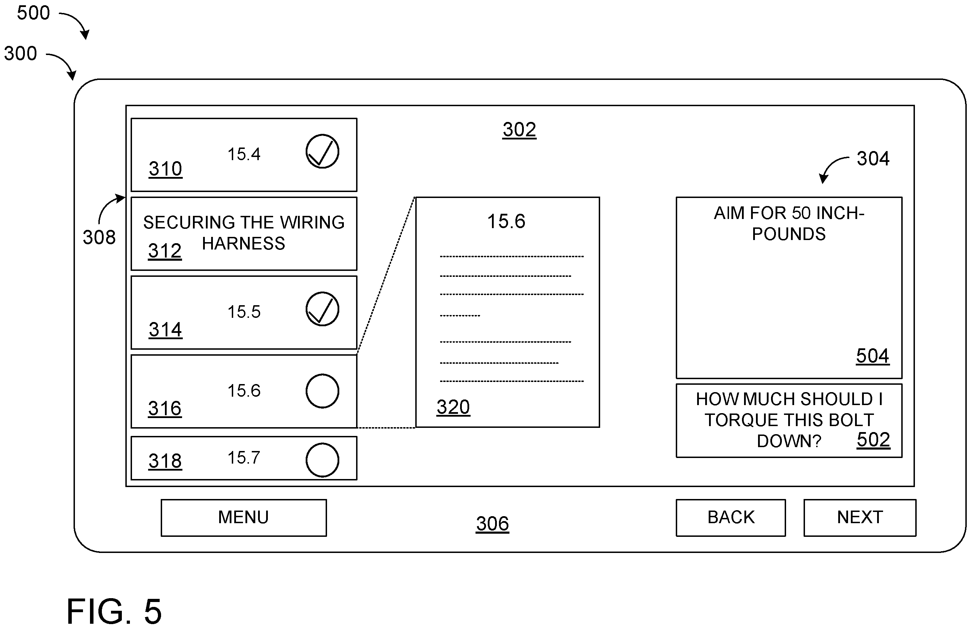

As an example, FIG. 5 shows a scenario 500 executed on computing device 300. As shown at 316, the user is performing step 15.6 of work protocol 308. The user enters a text prompt 502, asking AI assistant 304 how much a bolt should be torqued down.

Returning to FIG. 4, at 420, method 400 comprises retrieving text and metadata related to the first work protocol via the large language model based on the received prompt. For example text and metadata may be retrieved via the LLM. The retrieved text and metadata may follow the work protocol while being sensitive to specific context that is happening while the technician is performing the work protocol. For example, if the user provides a prompt related to inventory of a certain part, the AI assistant will retrieve text and/or metadata from a corresponding inventory spreadsheet or from communication with external inventory management system(s) via an API call. This may be facilitated through contextually linked documents, enabling rapid retrieval of pertinent contextual information.

At 430, method 400 comprises, providing a contextual response via the digital work environment based on the retrieved text and metadata. Responses from the AI are received in the digital work environment application and are displayed to users via text within the application, virtual object translation, and highlighting capabilities where applicable.

As an example, FIG. 5 shows AI assistant 304 has retrieved text and metadata related to user prompt 502, and provides a text response 504 - aim for 50 inch-pounds. This requires the AI assistant to know inherently which bolt the user is referring to - presumably there is a single bolt torqued down during step 15.6. In some examples, if the AI assistant is unable to discern an answer, the AI assistant may query the user for additional or more specific information.

In some examples, in addition to or as an alternative to the text response, the contextual response may include a visual response to the user via in-app imagery, highlighting, and/or animation responses within a 3D model where applicable, assisting in visualizing both complex design integration in context for engineers and assisting technicians in understanding and executing complex procedures. A user asking the AI assistant to highlight a particular part may also be provided access to metadata indicating who installed the part, when it was installed, the inventory status of related parts, what other steps the part is involved in, what control points this part is involved in, etc.

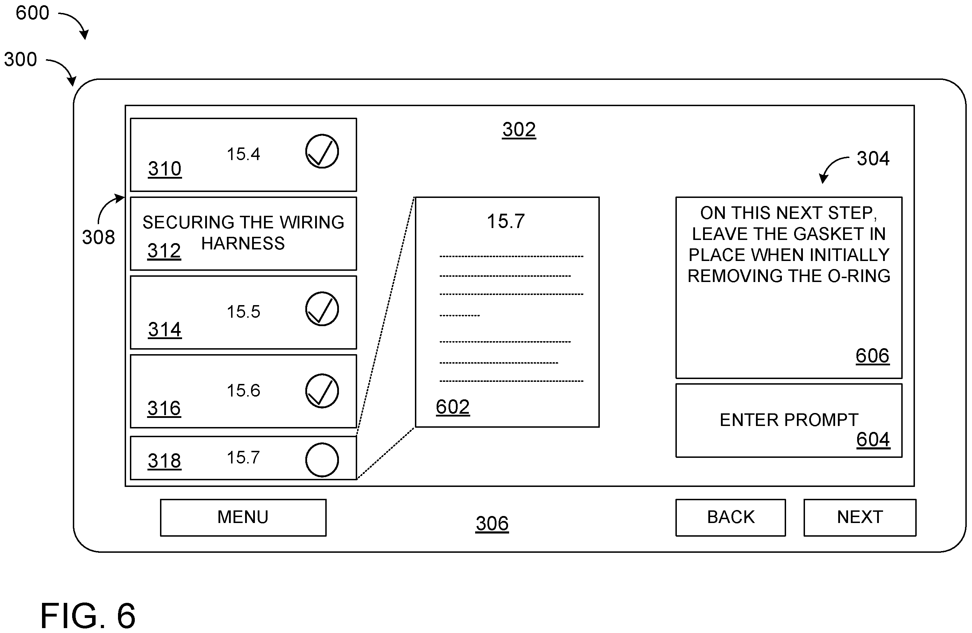

In some examples, the prompt comprises in-context progress through the first work protocol entered via the digital work environment. For example, FIG. 6 shows an example scenario 600 executed on computing device 300. As shown at 316, the user has completed step 15.6, and has moved on to step 15.7, as shown at 318. Detailed instructions are provided to the user in digital work environment 302 at 602. Here, the user has not entered a prompt, as shown at 604. Rather, the AI assistant 304 has received the prompt that the user has advanced to step 15.7, and has presented a contextual hint at 606, related to the detailed instructions for this step. This contextual hint may be as a result of previous users that have generated non-conformance reports during this step or during a later, related step.

In some examples, the prompt comprises a contextual prompt from the artificially intelligent assistant. The resulting response may be a contextual hint or piece of information pertinent to the task at hand. For example, engineers may be informed of designs that violate required specifications for a build or accessibility issues may be highlighted. For example, overlapping and neighboring systems may be considered. Contextual "hints" and information may be displayed in the digital work environment to assist in visualizing virtual build-ups to future procedures, fault/error detection, and non-conformance reports (NCR). This may give the user the feeling that the flow of the work protocol is being controlled by the AI assistant. For example, the contextual prompt from the artificially intelligent assistant may be related to one or more non-conformance reports.

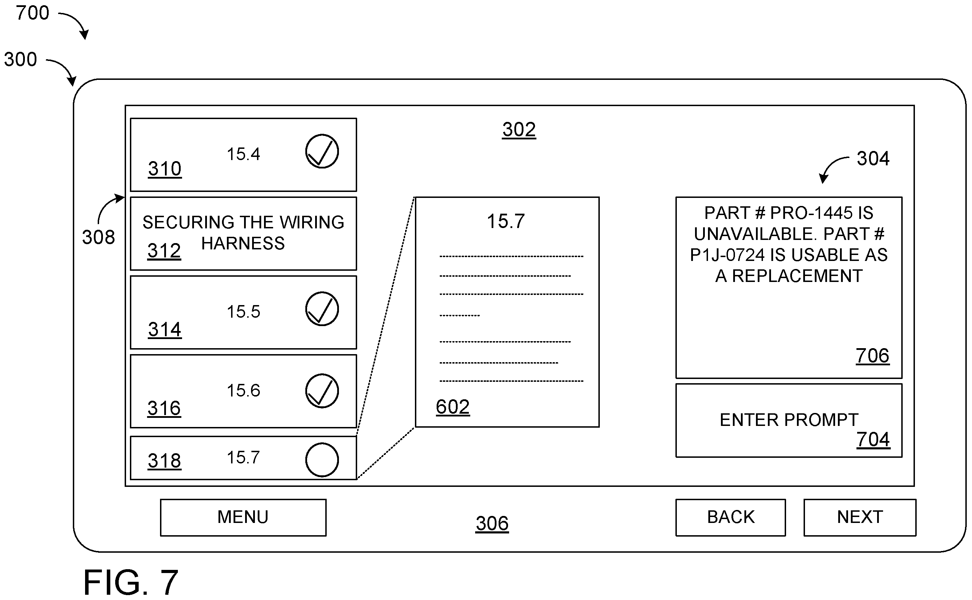

As an example, FIG. 7 shows an example scenario 700 executed on computing device 300. As shown at 318, the user is on step 15.7. The user does not enter a prompt, as shown at 704. The AI assistant 304 retrieves inventory data related to step 15.7, and at 706 indicates a replacement part that can be used instead of a part which is unavailable.

In some examples, the artificially intelligent assistant can be configured to dynamically reallocate resources based on contextual prompts from the artificially intelligent assistant. For example, a technician may be nearing the end of their shift, and the AI assistant may instruct them to perform a brief task that can be finished during the shift, rather than embarking on a lengthy procedure that will have to be aborted mid-way.

In some examples, the artificially intelligent assistant can be configured to dynamically resequence the first work protocol based on the retrieved text and metadata. For example, if there is no inventory at hand related to the current step of a work protocol, the technician may be instructed to skip one or more steps.

The AI assistant can provide instructions to intelligently skip steps so that work does not have to be undone or cause issues down the line. Intelligent resequencing of steps may be based on one or more pieces of information (e.g., inventory). The AI Assistant may consider a technician's qualifications in selectively resequencing, and/or a technician's non-conformance reports for similar jobs. The AI assistant may thus dynamically change resource allocation and sequencing based on technician's qualifications.

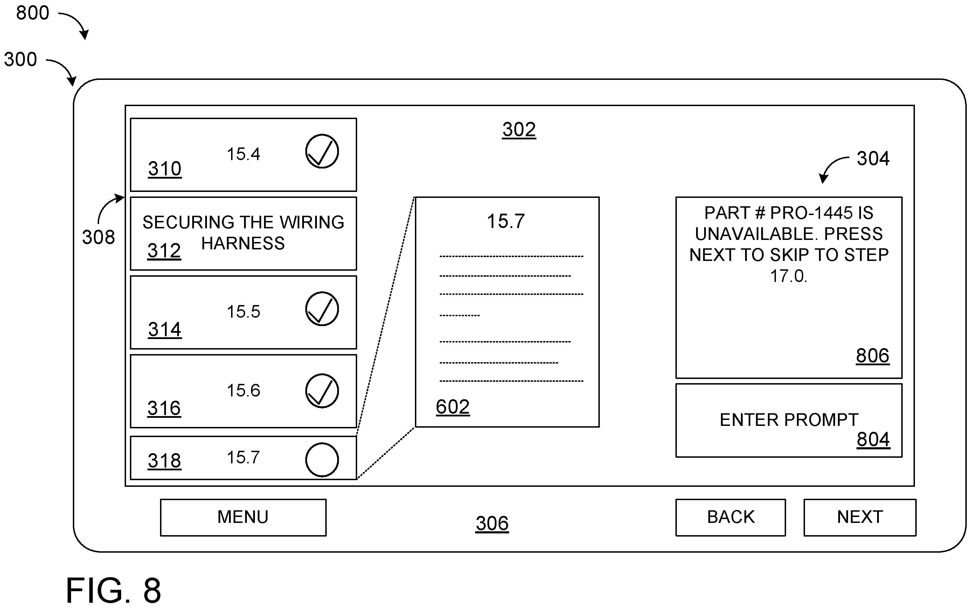

As an example, FIG. 8 shows an example scenario 800 executed on computing device 300. As shown at 318, the user is on step 15.7. The user does not enter a prompt, as shown at 804. The AI assistant 304 retrieves inventory data related to step 15.7, and at 806 indicates that the user should skip ahead to step 17.0.

In some examples, the digital work environment is an augmented reality (AR) environment. In such examples, the prompt may be a visual prompt of a physical work environment received from one or more cameras.

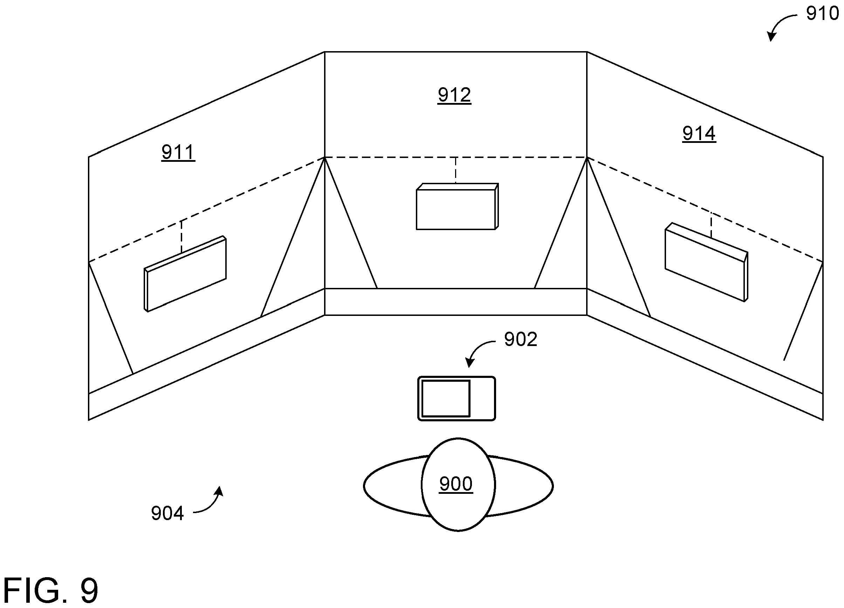

FIG. 9 shows a user 900 equipped with an augmented-reality device 902 in a work environment 904. Augmented reality device 902 may be an example of computing device 300. In this example, augmented reality device 902 is configured as a tablet computer, but alternatively may take the form of any suitable device with a camera and display, such as a phone or wearable computing device (e.g., head-mounted display device). Work environment 904 shows a portion of a workstation 910 with three similar, but non-identical substations (911, 912, 913). User 900 is training the augmented-reality device 902 on substation 912.

Computer vision may be used for object recognition and/or image & object classification in a work environment, enabling work in AR. A user may thus get information as to where they are in context. In the example of FIG. 9, substations 911, 912, and 913 have some, but not complete, overlap. Contextual hints and/or visual cues may be given to direct the worker to the correct one of multiple possibilities for a step in a work protocol.

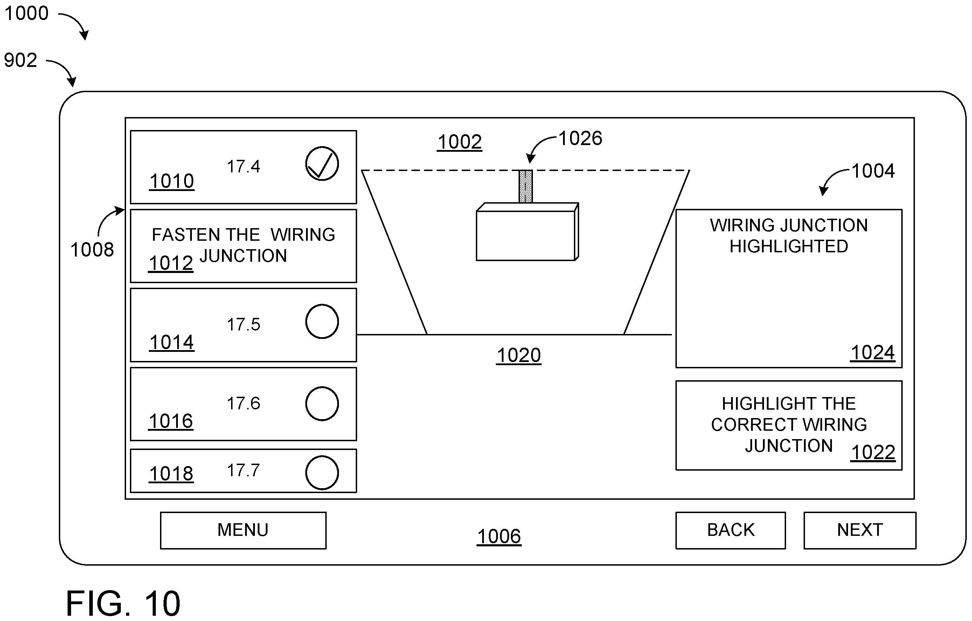

In some examples, the contextual response is thus a visual response presented via the augmented reality environment. At 1000, FIG. 10 shows an example augmented reality digital work environment 1002 featuring an artificially intelligent assistant 1004. Augmented reality device 902 is shown comprising a navigation pane 1006. An example work protocol 1008 is presented as a series of steps 1010, 1012, 1014, 1016, and 1018. Step 1010 is denoted as completed by checkmarks. The user is thus engaged in step 17.5, a sub step of a protocol for fastening a wiring junction. At 1020, a picture of a portion of substation 912 is shown. At 1022, the user provides a text prompt to highlight the correct wiring junction for step 17.5. AI assistant 1004 retrieves the appropriate information, provides a text response to the user at 1024, and highlights the wiring junction, as shown at 1026.

The AR subsystem thus receives input in the form of visual information of the environment. The AI assistant receives contextual information based on the visual input. The digital work environment may then output text, visuals, imagery, etc., similar to text prompts and direct AI assistant prompts.

As an example, the AI assistant may align the camera image with a retrieved digital CAD image. The user can then ask AI assistant prompts, such as "where is..." or "how do I perform this action". Metadata, in particular, CAD metadata can be retrieved from the LLM using the AI assistant. If the user is training a camera at a portion of the build environment, the AI assistant may recognize what is relevant to the next step in the work instruction and may then tell the digital work environment to highlight a specific part. The digital work environment may also be instructed to highlight possible NCR issues.

The AI assistant may have the same capability as the user to click on the AR interface, give contextual hints to objects, giving human-like interfaces and capabilities to the AI assistant. The digital work environment may further use the AR subsystem to provide information to oversight (e.g., executives, floor managers). For example, the AI assistant may be used to generate heatmaps and other output from worker activity, and visually present this information in context.

The trained LLMs and AI assistant may be further utilized in generating new work protocols. For example, an AI assist may be provided to an engineer drafting work protocols. Further, the AI assistant may be utilized to generate low-granularity, high-level work protocols based on training on existing work instructions and knowledge databases. For example, the AI assistant may generate instructions to "route and install wiring harness". Such an instruction may be verified by a human, and then additional contextually relevant content may be retrieved that can be folded into the new work protocol. In this way, the LLM and human users may collaborate to generate usable work instructions. Low-granularity work protocols can be generated for engineers for use in authoring new MBI and textual work protocols through utilizing aggregated data the LLM has been trained on. In other examples, the AI assistant may generate high-granularity work protocols that may then be collaborated on by a human user. For example, a revised protocol may be inherently high-granularity based on the level of detail comprised in the original protocol.

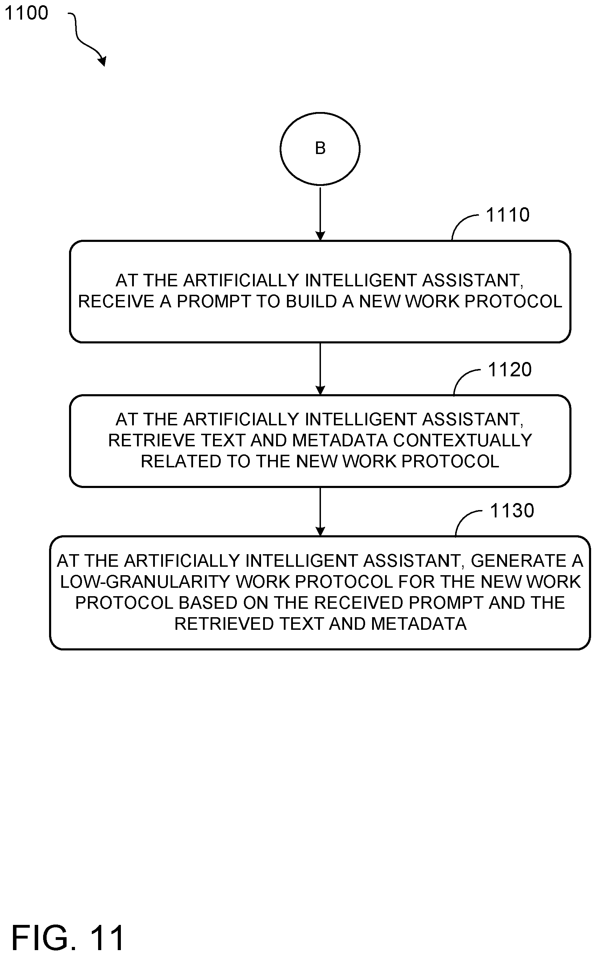

FIG. 11 shows a flow-diagram for an example computer-implemented method 1100 for generating low-granularity work protocols with an artificially intelligent assistant. Method 1100 may be implemented by one or more computing systems, such as computing systems 100 and 300. Method 1100 may be performed in conjunction with method 200, as indicated by the circled B.

At 1110, method 1100 comprises, at the artificially intelligent assistant, receiving a prompt to build a new work protocol. The prompt may be generated by a human or may be generated from an application-programming interface (API) call from a work protocol build script. At 1120, method 1100 comprises retrieving text and metadata contextually related to the new work protocol. At 1130, method 1100 comprises generating a low-granularity work protocol for the new work protocol based on the received prompt and the retrieved text and metadata.

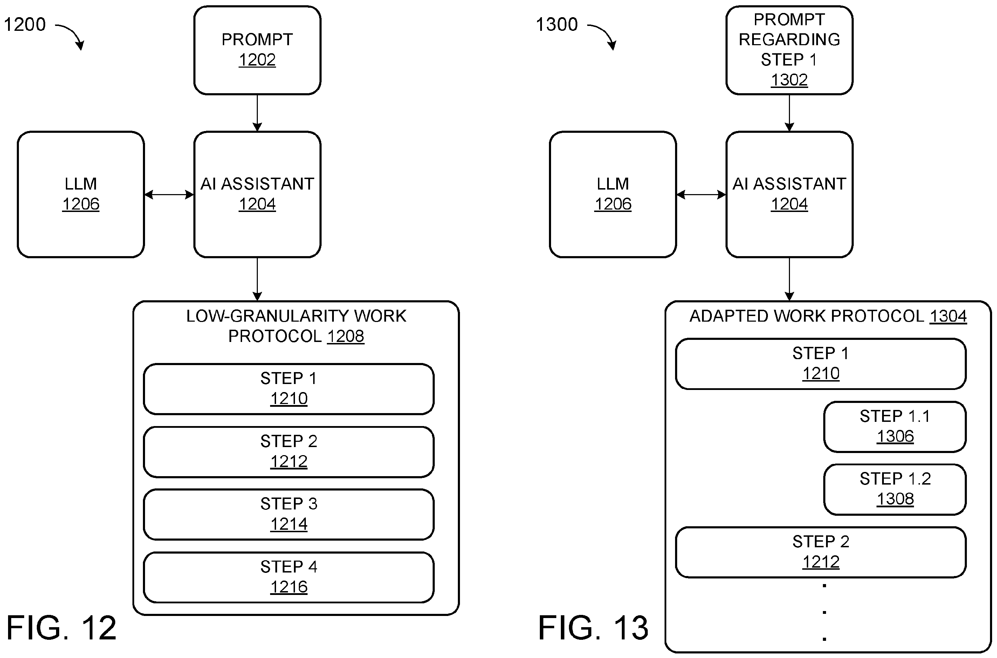

As an example, FIG. 12 shows an example scenario 1200 for generating a low-granularity work protocol. A prompt 1202, requesting a new work protocol is presented to AI assistant 1204. AI assistant 1204 may be an example of AI assistants 142, 304, and 1004. AI assistant 1204 then retrieves contextual information related to prompt 1202 from large language model 1206. LLM 1206 may be an example of LLM 134. AI assistant 1204 then uses the retrieved contextual information to generate low-granularity work protocol 1208. In this example, low-granularity work protocol 1208 comprises four broad steps - step 1 1210, step 2 1212, step 3 1214, and step 4 1216.

In some examples, method 1100 may further comprise receiving input from a user editing the low-granularity work protocol, retrieving contextually relevant content based on the received input, and presenting at least some of the retrieved contextually relevant content to the user. For example, a user may edit the low-granularity work protocol, indicate additional information that is usable to assemble a high-granularity work protocol, etc.

As an example, FIG. 13 shows an example scenario 1300 for adapting a low-granularity work protocol. A prompt 1302 regarding step 1 (1210) is received at AI assistant 1204. AI assistant 1204 then retrieves contextual information related to prompt 1302 from large language model 1206. AI assistant 1204 then uses the retrieved contextual information to generate adapted work protocol 1304. Steps 1-4 are conserved, but step 1 1210 now has additional granularity in the form of step 1.1 1306 and step 1.2 1308.

Generating and adapting work protocols in this way may allow the AI assistant to inform engineers engaged in design and authoring decisions of relevant and contextual information. For example, a lengthy document may only have one table that is relevant to a certain work protocol. Rather than forcing the engineer to review the entire document, the AI assistant can point the engineer to the relevant passage and provide context as to why it is relevant.

In some examples, method 1100 may further comprise receiving input from a user editing the low-granularity work protocol; retrieving contextually relevant content based on the received input; and indicating to the user potential non-compliance issues with the received input based on the retrieved contextually relevant content. In some examples, potential non-compliance issues are based on a global policy governing the stored technical documents. In some examples, potential non-compliance issues are based on a different work protocol, such as a work protocol from different program. In this way, the work protocol that is produced may generate fewer issues for the manufacturing technicians who implement the work protocol.

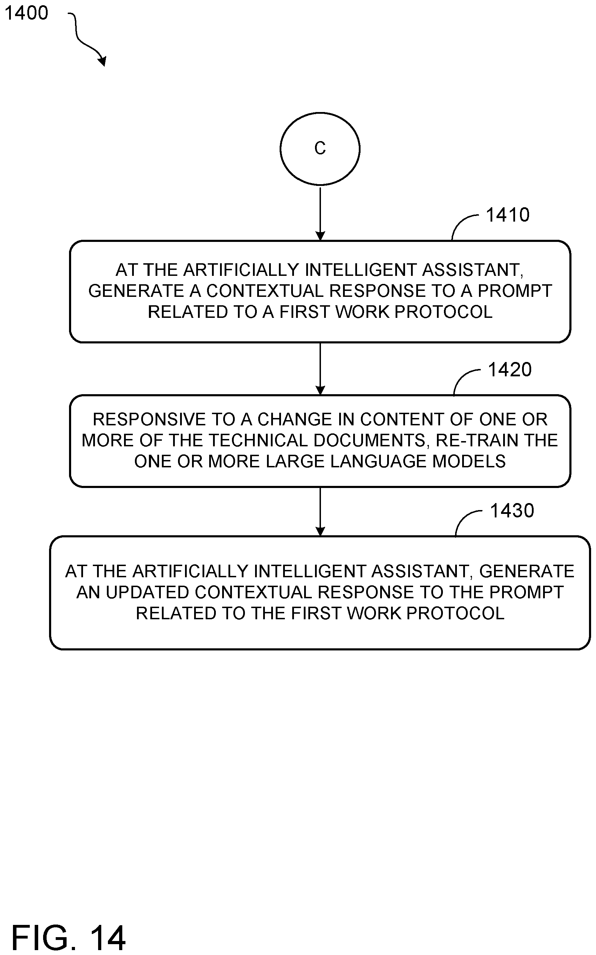

The LLMs and AI assistant may provide responses that are contextual, dynamic, and organic by periodically or constantly re-training the LLMs. FIG. 14 shows a flow-diagram for an example computer-implemented method 1400 for contextual retraining of a large language model. Method 1400 may be implemented by one or more computing systems, such as computing systems 100 and 300. Method 400 may be performed in conjunction with method 200, as indicated by the circled C.

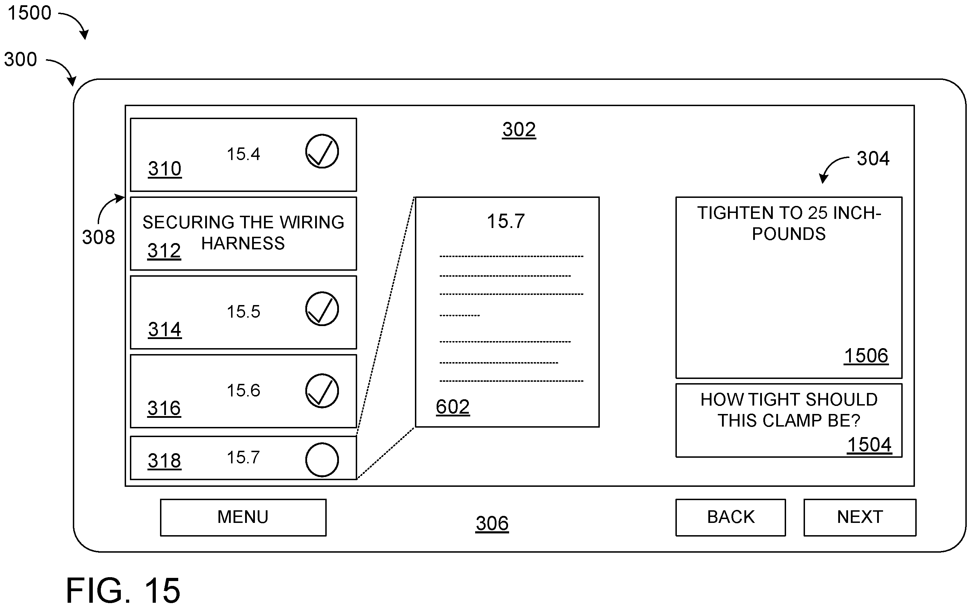

At 1410, method 1400 comprises, at the artificially intelligent assistant, generating a contextual response to a prompt related to a first work protocol. As an example, FIG. 15 shows a scenario 1500 executed on computing device 300. As shown at 318, the user is performing step 15.7 of work protocol 308. The user enters a text prompt 1504, asking AI assistant 304 how much a clamp should be tightened. At 1506, AI assistant 304 has retrieved text and metadata related to user prompt 1504 and provides a text response 1506 - tighten to 25 inch-pounds.

At 1420, method 1400 comprises, responsive to a change in content of one or more of the technical documents, re-training the one or more large language models. One or more technical documents may be editable and/or "live". Re-training may be performed based on updates to one or more static components, such as parts lists, procedure documents, guide documents, or training resources.

Retraining may be performed in response to inventory changes, non-compliance updates, new or updated documents, human text submissions, progress on work orders, skilled labor availability, environmental changes, etc. In some examples, the one or more large language models are retrained responsive to user progress through the first work protocol. For example, a user may report problems, update inventory, etc. Completion of a step of a work protocol may influence whether initiation of other steps from the same or other work protocols is compliant or not compliant. The user progress through the first work protocol may be entered by the user via the digital work environment and/or by the AI assistant. The behavior and/or actions of a technician in relation to a work environment may also be used as training data. Additional context can be edited or filled in on the fly, such as inventory, active or available resource allocation, available technicians, human resource (HR) allocation, etc.

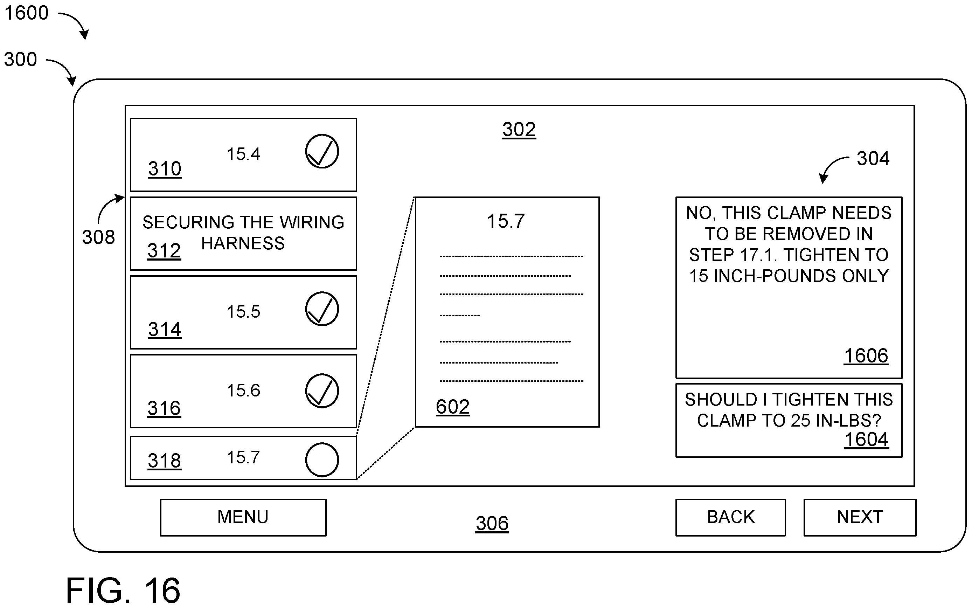

At 1430, method 1400 comprises at the artificially intelligent assistant, generating an updated contextual response to the prompt related to the first work protocol. As an example, FIG. 16 shows a scenario 1600 executed on computing device 300. As shown at 318, the user is performing step 15.7 of work protocol 308. The user enters a text prompt 1604, asking AI assistant 304 how whether a clamp should be tightened to 25 inch-pounds, as in scenario 1500. At 1606, AI assistant 304 has retrieved text and metadata related to user prompt 1604 and provides a text response 1606 - the clamp needs to be removed at a later step (step 17.1) tighten only to 15 inch-pounds.

In some examples, an updated contextual response to a prompt related to a second work protocol is generated at the artificially intelligent assistant. For example, changes in an adj acent build may impact the response for a current build. An electrician finishing a work protocol may allow for structural work protocols to proceed. An engineering work protocol may be updated based on input to a manufacturing work protocol. For example, persistent non-compliance reports during a manufacturing work protocol may cause retraining of the associated LLM and thus trigger a change in a low-granularity engineering work protocol.

In some examples, a work protocol may be redundantly performed on one build, or multiple adjacent builds may be using the same or similar work protocols. As such, if an issue arises during the execution of one work protocol, the LLM may be retrained, and contextual hints presented to other technicians performing the same work protocol. For example, if drilling a particular hole results in hitting something on the other side of a plate, the AI assistant may provide a contextual hint to others about to drill the same hole, urging caution due to low tolerance. A heat map of such occurrences may be provided as an input to the engineering work protocol. This may result in resequencing steps, as described with regard to FIG. 8.

The methods and processes described herein may be tied to a computing system of one or more computing devices. In particular, such methods and processes may be implemented as an executable computer-application program, a network-accessible computing service, an API, a library, or a combination of the above and/or other compute resources.

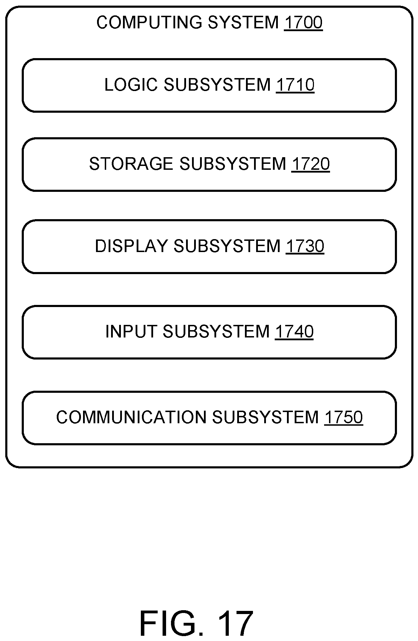

FIG. 17 schematically shows a simplified representation of a computing system 1700 configured to provide any to all of the compute functionality described herein. Computing system 1700 may take the form of one or more personal computers, network-accessible server computers, tablet computers, home-entertainment computers, gaming devices, mobile computing devices, mobile communication devices (e.g., smart phone), virtual/augmented/mixed reality computing devices, wearable computing devices, Internet of Things (IoT) devices, embedded computing devices, and/or other computing devices.

Computing system 1700 includes a logic subsystem 1710 and a storage subsystem 1720. Computing system 1700 may optionally include a display subsystem 1730, input subsystem 1740, communication subsystem 1750, and/or other subsystems not shown in FIG. 17. Computing systems 100 and 300 may be examples of computing system 1700.

Logic subsystem 1710 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 1720 includes one or more physical devices configured to temporarily and/or permanently hold computer information such as data and instructions executable by the logic subsystem. When the storage subsystem includes two or more devices, the devices may be collocated and/or remotely located. Storage subsystem 1720 may include volatile, nonvolatile, dynamic, static, read/write, read-only, random-access, sequential-access, location-addressable, file-addressable, and/or content-addressable devices. Storage subsystem 1720 may include removable and/or built-in devices. When the logic subsystem executes instructions, the state of storage subsystem 1720 may be transformed - e.g., to hold different data.

Aspects of logic subsystem 1710 and storage subsystem 1720 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 1730 may be used to present a visual representation of data held by storage subsystem 1720. This visual representation may take the form of a graphical user interface (GUI). Display subsystem 1730 may include one or more display devices utilizing virtually any type of technology. In some implementations, display subsystem may include one or more virtual-, augmented-, or mixed reality displays.

When included, input subsystem 1740 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 1750 may be configured to communicatively couple computing system 1700 with one or more other computing devices. Communication subsystem 1750 may include wired and/or wireless communication devices compatible with one or more different communication protocols. The communication subsystem may be configured for communication via personal-, local- and/or wide-area networks.

The methods and processes disclosed herein may be configured to give users and/or any other humans control over any private and/or potentially sensitive data. Whenever data is stored, accessed, and/or processed, the data may be handled in accordance with privacy and/or security standards. When user data is collected, users or other stakeholders may designate how the data is to be used and/or stored. All potentially sensitive data optionally may be encrypted and/or, when feasible anonymized, to further protect user privacy. Users may designate portions of data, metadata, or statistics/results of processing data for release to other parties, e.g., for further processing. Data that is private and/or confidential may be kept completely private, e.g., only decrypted temporarily for processing, or only decrypted for processing on a user device and otherwise stored in encrypted form. Users may hold and control encryption keys for the encrypted data. Alternately or additionally, users may designate a trusted third party to hold and control encryption keys for the encrypted data, e.g., so as to provide access to the data to the user according to a suitable authentication protocol.

When the methods and processes described herein incorporate ML and/or AI components, the ML and/or AI components may make decisions based at least partially on training of the components with regard to training data. Accordingly, the ML and/or AI components can and should be trained on diverse, representative datasets that include sufficient relevant data for diverse users and/or populations of users. In particular, training data sets should be inclusive with regard to different human individuals and groups, so that as ML and/or AI components are trained, their performance is improved with regard to the user experience of the users and/or populations of users.

ML and/or AI components may additionally be trained to make decisions so as to minimize potential bias towards human individuals and/or groups. For example, when AI systems are used to assess any qualitative and/or quantitative information about human individuals or groups, they may be trained so as to be invariant to differences between the individuals or groups that are not intended to be measured by the qualitative and/or quantitative assessment, e.g., so that any decisions are not influenced in an unintended fashion by differences among individuals and groups.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

Further, the disclosure comprises configurations according to the following clauses.

Clause 1. A computer-implemented method, comprising, storing technical documents in a storage device, the technical documents including at least work protocols and technical data files tagged with metadata; extracting text and metadata from the technical documents; training one or more large language models on at least the work protocols, extracted text, and metadata; commissioning an artificially intelligent assistant for the one or more large language models, the artificially intelligent assistant configured to at least retrieve text and metadata in response to receiving a prompt; providing a digital work environment including an interface for the artificially intelligent assistant; at the artificially intelligent assistant, receiving a prompt related to a first work protocol; retrieving text and metadata related to the first work protocol via the large language model based on the received prompt; and providing a contextual response via the digital work environment based on the retrieved text and metadata.

Clause 2. The computer-implemented method of clause 1, wherein the technical documents are stored for a plurality of programs on a per-program basis, and wherein the one or more large language models are trained on a per-program basis.

Clause 3. The computer-implemented method of clauses 1 and 2, wherein the one or more large language models are trained to crosslink extracted text and metadata for each work protocol.

Clause 4. The computer-implemented method of clauses 1 to 3, wherein images are extracted from the technical documents, and wherein the extracted images are used to train the large language models.

Clause 5. The computer-implemented method of clauses 1 to 4, wherein the prompt comprises text input by a user.

Clause 6. The computer-implemented method of clauses 1 to 5, wherein the prompt comprises in-context progress through the first work protocol entered via the digital work environment.

Clause 7. The computer-implemented method of clauses 1 to 6, wherein the prompt comprises a contextual prompt from the artificially intelligent assistant.

Clause 8. The computer-implemented method of clauses 1 to 7, wherein the contextual prompt from the artificially intelligent assistant is related to one or more non-conformance reports.

Clause 9. The computer-implemented method of clauses 1 to 8, wherein the artificially intelligent assistant is configured to dynamically reallocate resources based on contextual prompts from the artificially intelligent assistant.

Clause 10. The computer-implemented method of clauses 1 to 9, wherein the artificially intelligent assistant is configured to dynamically resequence the first work protocol based on the retrieved text and metadata.

Clause 11. The computer-implemented method of clauses 1 to 10, wherein the retrieved text and metadata comprise inventory data related to the first work protocol.

Clause 12. The computer-implemented method of clauses 1 to 11, wherein the stored technical documents include computer aided engineering and/or drafting files and associated metadata.

Clause 13. The computer-implemented method of clauses 1 to 12, wherein the digital work environment is an augmented reality environment, and wherein the prompt is a visual prompt of a physical work environment received from one or more cameras.

Clause 14. The computer-implemented method of clauses 1 to 13, wherein the contextual response is a visual response presented via the augmented reality environment.

Clause 15. A computer-implemented method, comprising, storing technical documents in a storage device, the technical documents including at least work protocols and technical data files tagged with metadata; extracting text and metadata from the technical documents; training one or more large language models on at least the work protocols, extracted text, and metadata; commissioning an artificially intelligent assistant for the one or more large language models, the artificially intelligent assistant configured to at least retrieve extracted text and metadata in response to receiving a prompt; and at the artificially intelligent assistant: receiving a prompt to build a new work protocol; retrieving text and metadata contextually related to the new work protocol; and generating a low-granularity work protocol for the new work protocol based on the received prompt and the retrieved text and metadata.

Clause 16. The computer-implemented method of clause 15, further comprising, receiving input from a user editing the low-granularity work protocol; retrieving contextually relevant content based on the received input; and presenting at least some of the retrieved contextually relevant content to the user.

Clause 17, The computer-implemented method of clauses 15 and 16, further comprising, receiving input from a user editing the low-granularity work protocol; retrieving contextually relevant content based on the received input; and indicating to the user potential non-conformance issues with the received input based on the retrieved contextually relevant content.

Clause 18. A computer-implemented method, comprising storing technical documents in a storage device, the technical documents including at least work protocols and technical data files tagged with metadata; extracting text and metadata from the technical documents; training one or more large language models on at least the work protocols, extracted text, and metadata; commissioning an artificially intelligent assistant for the one or more large language models, the artificially intelligent assistant configured to at least retrieve text and metadata in response to receiving a prompt; at the artificially intelligent assistant, generating a contextual response to a prompt related to a first work protocol; responsive to a change in content of one or more of the technical documents, re-training the one or more large language models; and at the artificially intelligent assistant, generating an updated contextual response to the prompt related to the first work protocol.

Clause 19. The computer-implemented method of clause 18, further comprising, responsive to user progress through the first work protocol, retraining the one or more large language models

Clause 20. The computer-implemented method of clauses 18 and 19, further comprising at the artificially intelligent assistant, generating an updated contextual response to a prompt related to a second work protocol.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computer-implemented method (400), comprising:
storing (210) technical documents (104) in a storage device (102), the technical documents (104) including at least work protocols (112) and technical data files tagged with metadata (124);
extracting (220) text (122) and metadata (124) from the technical documents (104);
training (230) one or more large language models (134) on at least the work protocols (112), extracted text (122), and metadata (124);
commissioning (240) an artificially intelligent assistant (142) for the one or more large language models (134), the artificially intelligent assistant (142) configured to at least retrieve text (122) and metadata (124) in response to receiving a prompt (502);
providing (250) a digital work environment (140) including an interface for the artificially intelligent assistant (142);
at the artificially intelligent assistant (142), receiving (410) a prompt (502) related to a first work protocol (308);
retrieving (420) text (122) and metadata (124) related to the first work protocol (308) via the large language model (134) based on the received prompt (502); and
providing (430) a contextual response (504) via the digital work environment (140) based on the retrieved text (122) and metadata (124).

2. The computer-implemented method (400) of claim 1, wherein the technical documents (104) are stored for a plurality of programs on a per-program basis, and wherein the one or more large language models (134) are trained on a per-program basis.

3. The computer-implemented method (400) of any preceding claim, wherein the one or more large language models (134) are trained to crosslink extracted text (122) and metadata (124) for each work protocol (112).

4. The computer-implemented method (400) of any preceding claim, wherein images (126) are extracted from the technical documents (104), and wherein the extracted images (126) are used to train the large language models (134).

5. The computer-implemented method (400) of any preceding claim, wherein the prompt (502) comprises text input by a user.

6. The computer-implemented method (400) of any preceding claim, wherein the prompt (502) comprises in-context progress through the first work protocol (308) entered via the digital work environment (302).

7. The computer-implemented method (400) of any preceding claim, wherein the prompt (502) comprises a contextual prompt from the artificially intelligent assistant (304).

8. The computer-implemented method (400) of claim 7, wherein the contextual prompt from the artificially intelligent assistant (304) is related to one or more non-conformance reports.

9. The computer-implemented method (400) of claim 7 or 8, wherein the artificially intelligent assistant (304) is configured to dynamically reallocate resources based on contextual prompts from the artificially intelligent assistant (304).

10. The computer-implemented method (400) of any preceding claim, wherein the artificially intelligent assistant (304) is configured to dynamically resequence the first work protocol (308) based on the retrieved text (122) and metadata (124).

11. The computer-implemented method (400) of any preceding claim, wherein the retrieved text (122) and metadata (124) comprise inventory data (110) related to the first work protocol (308).

12. The computer-implemented method (400) of any preceding claim, wherein the stored technical documents (104) include computer aided engineering and/or drafting files (106) and associated metadata (124).

13. The computer-implemented method (400) of any preceding claim, wherein the digital work environment (302) is an augmented reality environment (1002), and wherein the prompt (1022) is a visual prompt of a physical work environment (904) received from one or more cameras.

14. The computer-implemented method (400) of claim 13, wherein the contextual response is a visual response (1026) presented via the augmented reality environment (1002).

15. A computing system (1700) comprising instructions stored in a storage subsystem (1720) of the computing system (1700), the instructions adapted to, when executed by a logic subsystem (1710) of the computing system (1700), perform the computer-implemented method (400) of any preceding claim.
